Europäisches Patentamt

**European Patent Office**

Office européen des brevets

(19)

(11) Numéro de publication : **0 022 014**
**B1**

(12)

# FASCICULE DE BREVET EUROPÉEN

(45) Date de publication du fascicule du brevet :
**09.03.83**

(21) Numéro de dépôt : **80400933.0**

(22) Date de dépôt : **23.06.80**

(51) Int. Cl.³ : **F 16 K 24/02**, F 16 K 17/04

(54) **Soupape de sécurité à purge automatique.**

(30) Priorité : **28.06.79 FR 7916738**

(43) Date de publication de la demande :
**07.01.81 Bulletin 81/01**

(45) Mention de la délivrance du brevet :
**09.03.83 Bulletin 83/10**

(84) Etats contractants désignés :
**BE DE GB IT SE**

(56) Documents cités :
**CH A 361 174**
**US A 2 895 504**
**US A 3 193 988**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Enjolras, Hubert
105, rue du Coteau
Le Versoud F-38420 Domene (FR)**

(74) Mandataire : **Mongrédien, André et al
c/o BREVATOME 25, rue de Ponthieu
F-75008 Paris (FR)**

Jouve, 18, rue St-Denis, 75001 Paris, France

Soupape de sécurité à purge automatique

La présente invention a pour objet une soupape comportant un dispositif de purge automatique. Elle s'applique à la limitation de la pression régnant à l'intérieur d'une enceinte contenant un fluide incompressible, en particulier lorsque ladite enceinte est mise sous pression par une pompe volumétrique.

On connaît les soupapes de sécurité encore appelées « clapets de surpression ». Elles comportent une bille obturant un orifice, maintenue sur son siège par un piston d'appui poussé par un ressort. La force exercée par le ressort est réglable à l'aide d'une vis qui le comprime plus ou moins. De cette manière, il est possible de régler la pression à partir de laquelle la bille se soulève de son siège. Une telle soupape est montée sur la paroi d'une enceinte contenant un fluide sous pression. Lorsque la pression à l'intérieur de cette enceinte dépasse une valeur déterminée, la bille se soulève et le fluide contenu dans l'enceinte s'écoule à l'extérieur de celle-ci. On évite ainsi les risques d'avaries qui pourraient survenir en cas de surpression dans l'enceinte considérée. Voir p. ex. US-A-2 895 504.

Cependant, il est fréquent que l'on trouve des bulles d'un gaz, par exemple d'air, à l'intérieur du fluide contenu dans ladite enceinte. C'est pourquoi on monte généralement en plus de la soupape de sécurité un dispositif de purge automatique sur l'enceinte contenant le fluide sous pression. Le rôle de cette dernière est d'évacuer de l'enceinte une certaine quantité de fluide, par exemple d'huile qui entraîne avec elle le gaz se trouvant dans l'enceinte. Il est évident que l'emplacement de ce dispositif de purge automatique est important. En effet, il est nécessaire qu'il soit situé sur la partie la plus haute de l'enceinte, là où le gaz présent à l'intérieur du fluide vient s'accumuler.

Un tel dispositif de purge automatique pourra être constitué par un corps fixé par exemple par vissage sur la paroi de l'enceinte considérée, à l'intérieur duquel on trouve un gicleur d'entrée obturé par une aiguille plaquée contre ledit gicleur par un piston mû par un ressort d'équilibrage. La pression exercée par ce ressort d'équilibrage sur l'aiguille obturant l'entrée du gicleur peut être réglée à l'aide d'une vis de réglage. On peut ainsi régler la force exercée par ce ressort de telle manière que, par les effets de pulsation de pompage, l'aiguille équilibrée par le piston d'équilibrage mû par le ressort soit animé d'un mouvement alternatif et permettre l'écoulement du fluide émulsionné de gaz par le jeu annulaire existant entre ladite aiguille et le corps du dispositif de purge automatique.

A la longue cependant, le gaz s'accumule à l'entrée de la soupape de sécurité, forme un matelas compressible nuisible, particulièrement dans le cas où l'installation comporte une pompe volumétrique telle qu'une pompe à piston ou à membrane, dont il diminue le rendement volumétrique. Ce gaz, qui forme un matelas compressible, ne peut être évacué hors de l'enceinte considérée que dans la mesure où la pression hydraulique de service dépasse la valeur de tarage de la soupape de sécurité, ce qui est relativement rare. C'est pourquoi il est nécessaire de la détarer manuellement lorsque le matelas de gaz devient trop important, et fait chuter considérablement le débit de la pompe.

Un autre inconvénient de ce dispositif est constitué par le fait qu'il nécessite l'implantation de deux composants distincts et de deux canalisations pour assurer le retour de l'huile dans le réservoir, appelé la bâche, à l'intérieur duquel la pompe aspire le fluide. Son prix de revient et son encombrement en sont donc augmentés.

La présente invention a pour objet une soupape de sécurité qui remédie à ces inconvénients.

Cette soupape limitant la pression à l'intérieur d'une enceinte contenant un fluide est du genre de celles qui comportent un clapet plaqué sur son siège par un ressort tarable, une surpression apparaissant dans l'enceinte provoquant le soulèvement du clapet, et par suite un écoulement de fluide hors de cette enceinte. Elle se caractérise en ce que ledit clapet comporte un dispositif de purge automatique de l'enceinte. Le dispositif de purge automatique est constitué par un gicleur obturé par une aiguille plaquée contre ledit gicleur par un piston mû par un ressort d'équilibrage dont la force est réglable à l'aide d'une vis, le jeu annulaire situé entre ladite aiguille et le corps du clapet réalisant un orifice calibré.

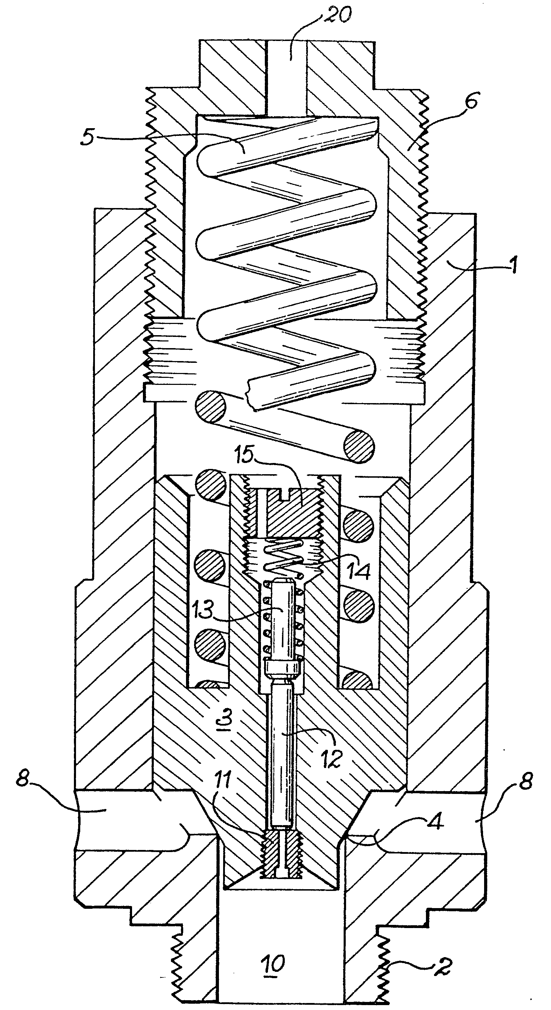

D'autres caractéristiques et avantages de l'invention apparaîtront mieux après la description qui suit d'un exemple de réalisation donné à titre explicatif et nullement limitatif en référence à la figure annexée sur laquelle on a représenté une vue en coupe de la soupape de sécurité à purge automatique réalisée selon la présente invention. Sur cette figure, la référence 1 désigne le corps de la soupape. Ce corps 1 comporte un filetage 2 qui permet de le visser sur la paroi d'une enceinte à l'intérieur de laquelle on trouve un fluide mis sous pression par une pompe telle qu'une pompe volumétrique. Le clapet 3 est plaqué sur son siège 4 par un ressort de tarage 5. La force exercée sur le clapet 3 par le ressort de tarage 5 est réglable par l'intermédiaire d'une vis 6. De cette manière, on peut régler la valeur de la pression à partir de laquelle le clapet 3 se soulève de son siège 4. La soupape de sécurité réalisée selon l'invention limite ainsi la pression régnant à l'intérieur de l'enceinte sur la paroi de laquelle elle est adaptée. Lorsque cette valeur est dépassée, le fluide s'écoule hors de ladite enceinte par les deux orifices 8 pratiqués dans le corps 1 de ladite soupape, puis il retourne à la bâche à l'intérieur de laquelle aspire la pompe.

Cependant, le gaz présent dans le fluide emplissant l'enceinte s'accumule à la longue à l'entrée 10 dite chambre de dégazage de la soupape de sécurité. C'est pourquoi, selon la présente invention, on a prévu un dispositif de purge automatique sur le clapet 3 de cette soupape. Ce dispositif de purge automatique comporte un gicleur d'entrée 11 obturé par une aiguille 12. Cette aiguille 12 est plaquée contre l'orifice du gicleur 11 par un piston 13 mû par un ressort d'équilibrage 14. La force de ce ressort d'équilibrage 14 est réglable à l'aide d'une vis 15. Le jeu annulaire situé entre l'aiguille 12 et le bord du clapet 3 constitue un orifice calibré. Ainsi, par les effets de pulsation de pompage, l'aiguille 12 équilibrée par le piston 13 et le ressort 14 est animée d'un mouvement alternatif et permet l'écoulement par le jeu annulaire situé entre ladite aiguille et le clapet 3, du fluide en émulsion avec le gaz qui se trouve dans la chambre de dégazage 10. Le fluide est acheminé vers la bâche par une tuyauterie se raccordant à l'orifice 20 de la soupape de sécurité.

Ainsi, une particularité importante de la soupape de sécurité selon la présente invention réside dans le fait que les chambres de dégazage des dispositifs de purge automatique et de limitation de la pression sont maintenant réunies en une seule. En conséquence, le gaz ne s'accumule pas jusqu'à former un matelas compressible, mais au contraire est évacué aussitôt par le dispositif de purge automatique équipant le clapet 3 de la soupape selon la présente invention. On supprime ainsi les inconvénients résultant de la présence de ce matelas de gaz compressible, lequel perturbe, comme il a été dit plus haut, le débit de la pompe volumétrique et diminue son rendement. L'élimination de ce matelas de gaz compressible rend inutiles les opérations périodiques de purges manuelles de la soupape de sécurité, qui sont indispensables avec les soupapes réalisées selon l'art antérieur. De ce fait, le régime de la pompe volumétrique est stabilisé.

Un autre avantage du dispositif selon la présente invention réside dans le fait que les organes de purge automatique et de limitation de pression ne nécessitent qu'une seule implantation au lieu de deux, ce qui en simplifie le montage. En outre, on utilise la même canalisation pour évacuer à la bâche les fluides de décharge d'une part, évacués hors de l'enceinte par la soupape de sécurité, et d'autre part, de purge, évacués hors de l'enceinte par le dispositif de purge automatique en émulsion avec le gaz présent dans la chambre 10 de dégazage. Ces deux fluides sont récupérés dans le carter qui habille la soupape selon la présente invention.

Bien entendu, l'emplacement de la soupape de sécurité selon la présente invention n'est pas indifférent. D'une manière identique aux dispositifs de purge réalisés selon l'art antérieur, elle doit être située au point le plus haut de l'enceinte afin de remplir correctement l'une de ses fonctions, qui est d'évacuer le gaz présent dans le fluide.

Il faut encore remarquer que la soupape selon la présente invention n'est pas limitée en pression. Il suffit, pour obtenir une valeur donnée de la pression maximale admissible à l'intérieur du circuit hydraulique sur lequel ladite soupape est adaptée, de choisir en conséquence des ressorts de tarage 5 et d'équilibrage 14 ainsi que l'importance de la fuite calibrée réalisée par le jeu annulaire qui existe entre l'aiguille 12 et le corps du clapet 3.

**Revendication**

Soupape de sécurité limitant la pression à l'intérieur d'une enceinte contenant un fluide, du genre de celles qui comportent un clapet (3) plaqué sur son siège (4) par un ressort tarable (5), une surpression apparaissant dans l'enceinte provoquant le soulèvement du clapet (3), et par suite un écoulement de fluide hors de cette enceinte, caractérisée en ce que ledit clapet (3) comporte un dispositif de purge automatique de l'enceinte, ledit dispositif de purge automatique étant constitué par un gicleur (11) obturé par une aiguille (12) plaquée contre ledit gicleur (11) par un piston (13) mû par un ressort d'équilibrage (14) dont la force est réglable à l'aide d'une vis (15), le jeu annulaire situé entre ladite aiguille (12) et le corps du clapet (3) réalisant un orifice calibré.

**Claim**

Safety valve limiting the internal pressure of a container holding a fluid of the type having a poppet (3) urged against its seat (4) by an adjustable spring (5), an excess of pressure within the container acting to lift the poppet (3) with a resulting flow of fluid from the container, characterized in that said poppet (3) has means for automatically venting the container, said automatic venting means comprising a jet (11) closable by a needle (12) urged against said jet (11) by a piston (13) which is urged by an equilibration spring (14), whose force is adjustable by means of a screw (15), the annular space between the said needle (12) and the body of the poppet (3) providing a calibrated orifice.

**Anspruch**

Sicherheitsventil zum Begrenzen des Innendruckes eines eine Flüssigkeit enthaltenden Gefäßes, nach Art solcher Ventile, die einen von einem einstellbaren Kraftelement (5) auf einen Ventilsitz (4) gedrückten Schließkörper (3) aufweisen, wobei bei Auftreten eines Überdruckes in dem Gefäß ein Abheben des Schließkörpers (3) und anschließend ein Abfluß von Flüssigkeit aus dem Gefäß verursacht wird, dadurch gekennzeichnet, daß der Schließkörper (3) mit einer automatischen Ausblaseinrichtung für das Gefäß versehen ist, die eine Düse (11) aufweist, welche durch eine Nadel (12) verschlossen ist, die gegen die Düse (11) durch einen Kolben (13) gedrückt ist, der von einer Ausgleichsfeder (14) beaufschlagbar ist, deren Federkraft mit Hilfe einer Stellschraube (15) einstellbar ist, und daß der ringförmige Zwischenraum zwischen der Nadel (12) und dem Block des Schließkörpers (3) eine kalibrierte Auslaßöffnung bildet.